(19) **Europäisches Patentamt**
**European Patent Office**
**Office européen des brevets**

(11) **EP 2 053 812 B1**

(12) **EUROPEAN PATENT SPECIFICATION**

(45) Date of publication and mention
of the grant of the patent:
**28.09.2016 Bulletin 2016/39**

(51) Int Cl.:
**H04L 25/03** (2006.01)     **H04B 7/15** (2006.01)
**H04L 27/00** (2006.01)

(21) Application number: **08253412.4**

(22) Date of filing: **21.10.2008**

(54) **Adaptive filter arrangement for improved recovery of wanted signals**

Adaptive Filteranordnung zur verbesserten Rückgewinnung von erwünschten Signalen

Arrangement de filtrage adaptatif pour une récupération augmentée des signaux désirés

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.10.2007 GB 0720658**

(43) Date of publication of application:
**29.04.2009 Bulletin 2009/18**

(73) Proprietor: **British Broadcasting Corporation
London W1A 1AA (GB)**

(72) Inventors:
• **Wiewiorka, Adam
Surrey, KT20 6NP (GB)**
• **Moss, Peter
Surrey, KT20 6NP (GB)**

(74) Representative: **Loveless, Ian Mark
Reddie & Grose LLP
16 Theobalds Road
London WC1X 8PL (GB)**

(56) References cited:
**EP-A- 1 724 946     US-A1- 2002 039 383**

**Description**

BACKGROUND OF THE INVENTION

This invention relates to adaptive filters, which can be used in an on-channel repeater, echo canceller, noise canceller or interference canceller, or other control system. Such filters are particularly useful in rebroadcast transceivers which are designed to receive RF (radio frequency) signals, amplify them, and retransmit them onward on the same frequency. Such transceivers are known in the broadcasting field as on-channel repeaters, and are sometimes termed active deflectors.

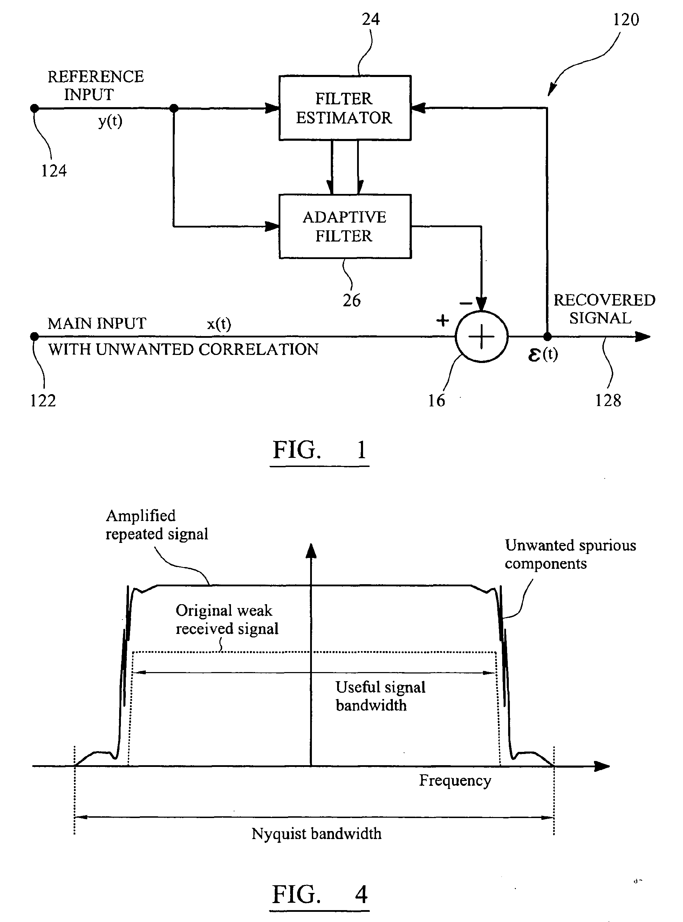

One category of adaptive filters is used to remove from a target signal an unwanted component that is correlated with a given reference signal. Often coefficient estimators used in filters find the amount of correlation between the reference and the target signal and calculate the filter coefficients (usually plural though in principle there can be just one coefficient) so that the correlated part of the target signal can be recreated from the reference. This recreated signal is then subtracted from the target signal to obtain the desired output. An example of such a filter arrangement 120 is shown in Figure 1. A main input 122 receives a main signal $x(t)$ to be filtered; this signal includes unwanted correlation with a reference signal $y(t)$ which is received at a reference input 124. The output of an adaptive filter 26 is combined with, viz. subtracted from, the main signal in a combiner 16, the inverting input of which is connected to the output of the adaptive filter and the non-inverting input of which is connected to the main input 122. A filter estimator 24 supplies the required filter coefficients to the adaptive filter 26. The filter estimator receives the reference signal from input 124, and also receives the output of the combiner 16, which is the recovered signal $\varepsilon(t)$ delivered to the circuit output 128.

There are also other adaptive filters that do not estimate or apply a filter explicitly, but recreate the desired output using an indirect method.

However, it is sometimes the case that the reference signal is itself derived from the output of the adaptive filter, as is the case in echo cancellation systems, or is otherwise correlated with the wanted signal to be obtained at the output. The filter estimator will try to remove this correlation as well. Although this underlying correlation should not be removed, the filter estimator will treat it as unwanted crosstalk between the reference and the input and will try to remove it. This invention addresses this issue.

One of the applications of the method is in on-channel repeaters. An on-channel repeater receives a weak signal through a receiving antenna and reradiates an amplified version of this signal on the same frequency using another antenna. Due to the physical proximity between the antennas, as well as reflections off the ground and nearby objects, there may be a significant amount of unwanted feedback from the output of the repeater into its input. If not removed, such feedback causes instability and relaxation oscillations that render the signal unusable. The cancellation of parasitic feedback can be performed by a digital adaptive finite impulse response (FIR) filter which models the path between the antennas. The coefficients of that filter may be estimated using the Least-Mean-Square (LMS) algorithm applied as described in European Patent 772310B ("our earlier patent"), which describes a method and apparatus which has been found to be surprisingly effective in removing the feedback. In this method there is an amplification path between the input and output antennas which provides substantially linear processing and includes a delay sufficient to decorrelate the output and input. The amplification path provides substantially linear processing without demodulation and decoding, and a filter-estimator responsive to the signal in the amplification path correlates the signal in the amplification path before the delay with a noise-like signal taken after the delay to produce a plurality of correlation coefficients. The filter estimator may use the least-mean-square method. An adaptive filter in the form of a transversal filter receives the signal in the amplification path and is controlled by the control coefficients to provide a modified signal, and a combiner combines the modified signal with the signal in the amplification path so as to reduce the effect of the feedback. In this way, unwanted feedback from the output of the active deflector to the input is substantially eliminated. The compensation conveniently makes use of the inherent noise-like property of the signal, as described it is an OFDM signal; however a separate noise signal may be added if necessary.

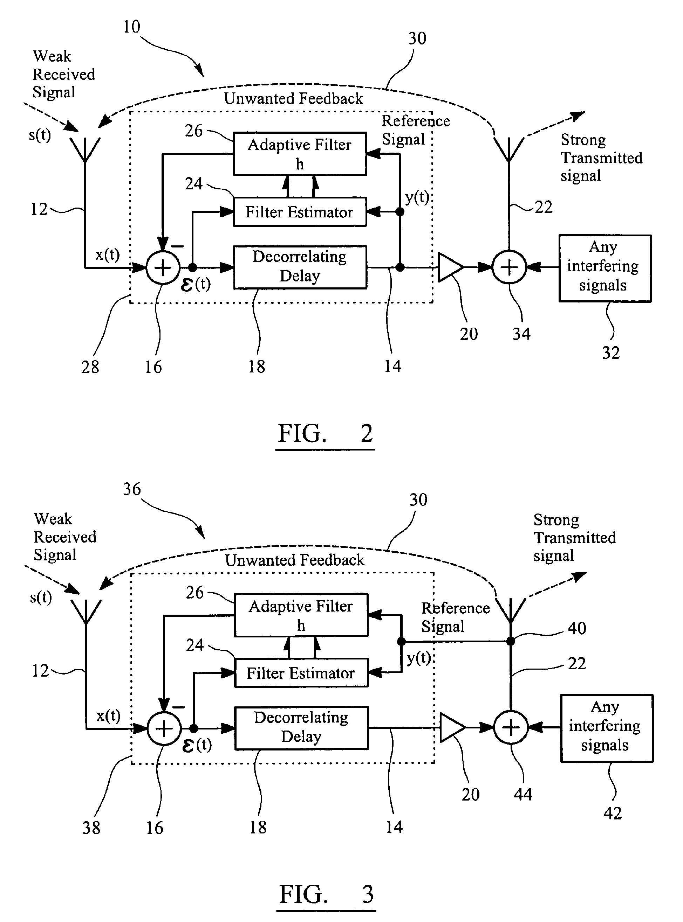

An example of a transceiver of the type described in our earlier patent is shown in Figure 2. The transceiver 10 has a receiving antenna 12 which is coupled to an amplification path 14 which includes an adder 16, a decorrelating delay 18, and an amplifier 20. The output of the amplifier is applied to a transmitting antenna 22. The output of the delay 18 is also applied as a reference signal $y(t)$ to a filter estimator 24, which also receives the output of adder 16, and an adaptive filter 26, which applies an output to the subtractive or inverting input of adder 16. The construction and operation of the whole of this corrector circuitry 28 is described in detail in our earlier patent. Part of the output of the transmitter antenna will be picked up by the receiving antenna as indicated by the dashed line 30, as unwanted feedback. The corrector 28 removes the effect of this feedback.

In the known system of our earlier patent referred to above, the input of the adaptive filter is connected internally to the output of the repeater device as described above and shown in Figure 2. Whereas in that patent the filter processes the retransmitted signal obtained internally in the repeater and tries to model the external parasitic feedback, in an improvement described in our European Patent Application EP 1724946 external feedback from the transmitting antenna feed is used, that includes any distortion, inter-modulation products and interference from adjacent channels. That improvement is illustrated in Figure 3 in which the same references are used as in Figure 2. It is seen that in this case the reference signal $y(t)$, that is the input to the adaptive filter 26 and the reference input to the filter estimator 24, is taken not from within the processor 38 but rather from the transmitter antenna 22, as indicated at 40. That is to say, the reference signal is taken after the transmitter power amplifier.

Furthermore, as shown, interfering signals on the adjacent channel, indicated at 42, are arranged to be transmitted on the same transmitting antenna as the transmitting antenna 22 used by the repeater, by virtue of a combiner 44. The combiner may in fact be a coupler, or may be absent altogether if no adjacent channel transmitter is present. The system nevertheless still mitigates the effects of power amplifier intermodulation on the feedback cancellation process.

As noted above, the coefficients of the adaptive impulse response filter may be estimated using the Least-Mean-Square (LMS) algorithm, where the LMS algorithm finds the correlations between the signal recovered by the cancellation circuit and a delayed version of it that constitutes the retransmitted signal. If the recovered signal contains components that result from the parasitic coupling between the antennas, they will correlate with the retransmitted signal and adjust the filter coefficients in order to minimise that correlation, thus leaving only the wanted received signal.

However, we have appreciated that the LMS algorithm, as well as any other algorithm that minimises the power of the recovered signal, tries to remove all correlation between the two aforementioned signals including the residual autocorrelation. This autocorrelation exists even if the original weak received signal has a flat spectrum, such as the OFDM signal, because it must be sampled at a rate slightly higher than twice the bandwidth of the wanted signal. There must be some unoccupied frequency range left between the edge of the signal bandwidth and the Nyquist frequency in order to make any subsequent upsampling and/or reconstruction filters realisable. This is illustrated in Figure 4, where the occupied frequency band extends to about 93% of half the sampling frequency, leaving 7% unoccupied (not shown precisely to scale for clarity).

Thus the spectrum cannot be flat in the entire Nyquist band and there will be some autocorrelation. The fact that the filter estimation algorithm removes this autocorrelation has negligible detrimental effect within the useful signal bandwidth, but results in spurious frequency components appearing very close to the signal outside the useful band.

Figure 4 shows the spectrum of the original (main) signal, and the repeated (recovered) signal with the unwanted spurious components.

In an environment when the path between the antennas does not change very fast these components are largely harmless and do not impair reception of such a signal, while the transmission spectrum mask can be satisfied by subsequent digital and analogue channel filters. On the other hand, we have appreciated that they can cause problems if the coupling between antennas is subject to rapid changes, in conjunction with "tracking" errors due to the inability of the LMS estimation circuit to react quickly enough to these changes. In some circumstances we have found that these spurious out-of-band components can grow so much that they cause numerical overflows in digital circuitry as well as non-linear distortion in analogue circuits, such as mixers or amplifiers.

European Patent Application EP 1555769 describes a system for flattening the spectrum of a COFDM (Coded Orthogonal Frequency Division Multiplex) signal, and EP 1744455 extends this to more broadly-based signal shaping that adjusts the signal spectrum to conform with an arbitrary reference spectrum.

SUMMARY OF THE INVENTION

The invention in its various aspects is defined in the appended claims to which reference should now be made. Advantageous features are set forth in the dependent claims.

Preferred embodiments of the invention are described by way of example in more detail below with reference to the drawings. The embodiments described address the issue of spurious components due to the autocorrelation of the input signal by a modification of the input of the adaptive filter in order to remove from it the part that is linearly dependent on the retransmitted signal. The method should benefit not just LMS algorithm operation, but any architecture which uses a cancellation loop with an adaptive filter.

A digital adaptive filter is described for compensating for an unwanted signal which has been combined with a wanted signal into an input signal, so as to produce a recovered signal. The filter has control means responsive to a reference signal containing the unwanted signal and to the recovered signal to cross-correlate the signals, for controlling the filter. The control means controls the filter so as to avoid adverse effects of autocorrelation of the input signal due to the active bandwidth of the input signal being smaller than the Nyquist bandwidth. In the described embodiment the control means controls the filter to remove or at least reduce the part of the reference signal that is substantially linearly dependent upon the wanted signal. The control means as described includes means for multiplying the impulse response function for the reference signal by a matrix containing shifted versions of the autocorrelation function of the recovered signal to provide a product signal.

The multiplication to produce the product signal may take longer than one sample period of the signal and use the impulse response function from a previous sample.

Preferably the filter includes means for multiplying the product signal by the recovered signal and a gain factor. The cross-correlation between the reference signal and the recovered signal may be adjusted such that the cross-correlation due to autocorrelation of the recovered signal is substantially removed and does not contribute to the estimates of the filter coefficients. Desirably the conjugate of the product signal is multiplied by the product of the current sample or a recent previous sample of the signal. The reference signal may be substantially equal to the recovered signal whereby only the autocorrelation function is multiplied by the product of the current or recent previous sample of the recovered signal and the complex conjugation of itself.

The reference signal may be subject to a least-mean-square algorithm. Also, the impulse response function may be generated by a least-mean-squares algorithm which matches the reference signal to the recovered signal.

BRIEF DESCRIPTION OF THE DRAWINGS

The invention will be described in more detail by way of example with reference to the drawings, in which:

Figure 1 is a block diagram of a generalised adaptive filter arrangement with which the present invention can be used;
Figure 2 is a block diagram illustrating a first known on-channel repeater as described in European Patent 772310B;
Figure 3 is a block diagram illustrating a second known on-channel repeater described in European Patent Application 1724946 which is an improvement on the repeater of Figure 1;
Figure 4 is a spectrum diagram showing the unwanted spurious components;
Figure 5 is a block diagram of a generalised adaptive filter arrangement modified in accordance with the present invention;
Figure 6 is a block diagram of the on-channel repeater of Figure 3 with certain elements expanded;
Figure 7 is a block diagram showing an on-channel repeater embodying the present invention;
Figure 8 is a block diagram of part of the digital processor in a first variant of the embodiment of Figure 7;
Figure 9 is a block diagram of part of the digital processor in a second variant of the embodiment of Figure 7; and
Figure 10 shows a circuit for modification of the reference signal in accordance with this invention applied to an IQ cross-talk removal system of the type described in European Patent Application 1801963.

DETAILED DESCRIPTION OF THE PREFERRED EMBODIMENTS

The theoretical basis for the modification of the reference signal used in the LMS estimator of an on-channel repeater embodying the invention will now be described.

*Generalised method of modification of the reference signal.*

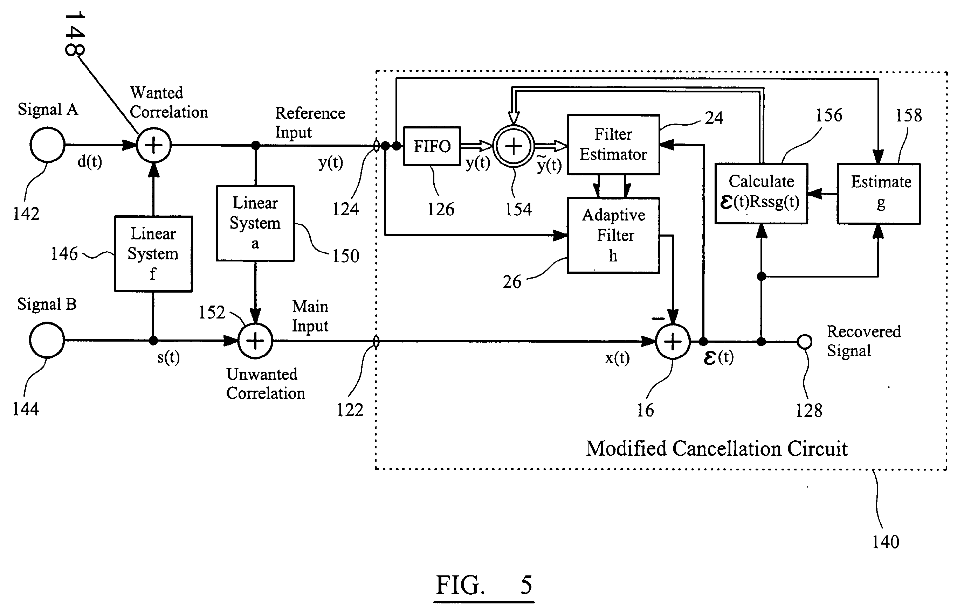

The method can be applied to any on-channel repeater, echo, noise or interference canceller or control system that uses an adaptive finite impulse response (FIR) filter h to extract a signal $\varepsilon(t)$, as similar as possible to the original wanted signal s(t), from the corrupted input signal $x(t)$ and the reference signal y(t), which is itself derived from $\varepsilon(t)$ in a linear manner or contains a signal linearly derived from s(t), as shown in Figure 5. The filter estimator must also utilise a vector y($t$) consisting of delayed samples $y(t)$, $y(t\text{-}1)$, $y(t\text{-}2)$, ... $y(t\text{-}N+1)$.

Figure 5 is based on Figure 1 and the same components have the same reference numerals. The modified cancellation circuit 140 also includes additional components. The figure furthermore gives an illustrative derivation of the main and reference signals.

The reference signal is derived from a signal A received at an input 142 and represented as $d(t)$. The main signal is derived from a signal B received at an input 144 and represented as $s(t)$. A linear system 146 receives s($t$) and subjects it to a function **f.** The resultant is added to the reference signal in an adder 148 to provide $y(t)$ which contains the wanted correlation. Another linear system 150 receives $y(t)$ and subjects it to a function a. The resultant is added back to the main signal in an adder 152 to provide $x(t)$ which contains unwanted correlation. It will be appreciated by those skilled in the art that this is a simple illustration rather than an actual representation of the circuits involved. The signals $x(t)$ and $y(t)$ constitute the main and reference signals respectively.

In accordance with this invention the cancellation circuit 140 is modified so as to modify the reference signal before it is used to generate the filter coefficients. As with Figure 1, the main input 122 receives the main signal $x(t)$ to be filtered; this signal includes the unwanted correlation. The reference signal y(t) is received at the reference input 124. The output of the adaptive filter 26 is subtracted from the main signal in the combiner 16, the inverting input of which is connected to the output of the adaptive filter and the non-inverting input of which is connected to the main input 122. The filter estimator 24 supplies the required filter coefficients to the adaptive filter 26. The filter estimator receives the reference signal from input 124 through, in this instance, a FIFO (first-in, first-out) buffer register 126 used to create the vector *y(t)* from the scalar samples *y(t), y(t-1), y(t-2)* (implicitly present inside filter estimator 24 in Figure 1), and also receives the output of the combiner 16, which is the output or recovered signal $\varepsilon(t)$ delivered to the circuit output 128.

However between the buffer register 126 and the filter estimator 24 there is a further combiner 154 operative as a subtractor to subtract a signal from the reference input. The buffer register now provides a vector output $\mathbf{y}(t)$; the double line on Figure 5 denotes a vector signal connection. Thus the combiner 154 provides a vector output $\tilde{\mathbf{y}}(t)$ to the filter estimator 24.

The signal applied to the inverting input of vector combiner 154 is provided by a circuit 156 which itself receives the recovered signal $\varepsilon(t)$ and calculates a function $\varepsilon(t)\mathbf{R}^*_{ss}\mathbf{g}(t)$, where $\mathbf{g}(t)$, or $\mathbf{g}$, is estimated by a circuit 158, and $\mathbf{R}_{ss}$ is a matrix as described below. The asterisk is used in conventional manner to indicate complex conjugation. Circuit 158 receives the reference signal *y(t)* from input 124, and the recovered signal $\varepsilon(t)$ from output 158. The functioning of these added components 156, 158 will now be described by reference to their mathematical operation.

The parasitic coupling corrupts the signal s(t) as follows:

$$x(t) = s(t) + \mathbf{y}(t)^{\mathrm{T}}\mathbf{a}(t) + b(t) \tag{1}$$

where a(*t*) defines the parasitic feedback to be removed, and b(t) is some arbitrary signal uncorrelated to *s(t),* for example noise, which can be ignored in these calculations. The canceller 140 removes the coupled parasitic using the adaptive filter **h** which is an estimate of **a,** the function provided by the linear system 150:

$$\varepsilon(t) = x(t) - \mathbf{y}(t)^{\mathrm{T}}\mathbf{h}(t) \tag{2}$$

If it is assumed that **h** is estimated by an algorithm that, explicitly or implicitly, uses the cross-correlation between $\varepsilon(t)$ and *y(t),* for example an algorithm that minimises the energy of $\varepsilon(t)$ and uses the vector **y**(t) in the estimation process, the solution can be improved by modifying **y**(t). If the reference signal contains a term of linearly transformed s(t), then the original input *d(t)* is no longer available on its own but rather:

$$y(t) = d(t) + \mathbf{s}(t)^{\mathrm{T}}\mathbf{f}(t) \tag{3}$$

This poses problems for the filter estimator because the cross-correlation between $\varepsilon(t)$, (and thus s(*t*)), and *y(t)* depends also on the autocorrelation of s(t). Assuming that **f**(*t*) is constant:

$$\mathbf{r}_{sy} = \frac{\mathrm{E}[s(t)\mathbf{y}(t)^{\bullet}]}{\sqrt{\mathrm{E}[s(t)s(t)^{\bullet}]}\sqrt{\mathrm{E}[y(t)y(t)^{\bullet}]}} = \frac{\mathrm{E}[s(t)\mathbf{S}(t)^{\mathrm{H}}\mathbf{f}^{\bullet}]}{\sqrt{\mathrm{E}[s(t)s(t)^{\bullet}]}\sqrt{\mathrm{E}[y(t)y(t)^{\bullet}]}}$$

$$= \frac{\mathrm{E}[s(t)\mathbf{S}(t)^{\mathrm{H}}]\mathbf{f}^{\bullet}}{\sqrt{\mathrm{E}[s(t)s(t)^{\bullet}]}\sqrt{\mathrm{E}[y(t)y(t)^{\bullet}]}} = \mathbf{R}_{ss}\mathbf{f}^{\bullet}\frac{\sqrt{\mathrm{E}[s(t)s(t)^{\bullet}]}}{\sqrt{\mathrm{E}[y(t)y(t)^{\bullet}]}} \tag{4}$$

where **S**(*t*) is a Hankel matrix with elements $s_{kn} = s(t\text{-}n\text{-}k)$ so that $\mathbf{R}_{ss}$ has the following entries:

$$r_{nk} = \frac{\mathrm{E}\left[s(t)s(t-k-n)^{\bullet}\right]}{\mathrm{E}\left[s(t)s(t)^{\bullet}\right]} \tag{5}$$

The estimate of h can be improved by modifying **y**(t) to remove this autocorrelation to give $\tilde{\mathbf{y}}(t)$ :

$$\tilde{\mathbf{y}}(t) = \mathbf{y}(t) - G\varepsilon(t)\mathbf{r}_{sy}^{\bullet} \tag{6}$$

where G is a scaling factor:

$$G = \sqrt{\frac{E\left[y(t)y(t)^{\bullet}\right]}{E\left[\varepsilon(t)\varepsilon(t)^{\bullet}\right]}} \qquad (7)$$

If function f is not known but it is assumed to be small within the time interval where a and h are large, an estimate **g** of f can be computed using LMS or some other algorithm. Then $\mathbf{r}_{sy}$ can be calculated using **g** and $\mathbf{R}_{ss}$.

$$\widetilde{\mathbf{y}}(t) = \mathbf{y}(t) - \varepsilon(t)\mathbf{R}_{ss}^{\bullet}\mathbf{g}(t) \qquad (8)$$

where **g** is the estimate of **f** for a time window around zero, not covered by h. This modified value $\widetilde{y}(t)$ is then used instead of **y**(t) by the filter estimation algorithm to obtain **h.** Indeed, **h** need not even be computed or used explicitly, as methods such as the QR lattice algorithm can be used (see, e.g., Haykin, S., Adaptive Filter Theory, Prentice-Hall, USA, ISBN 0130901261).

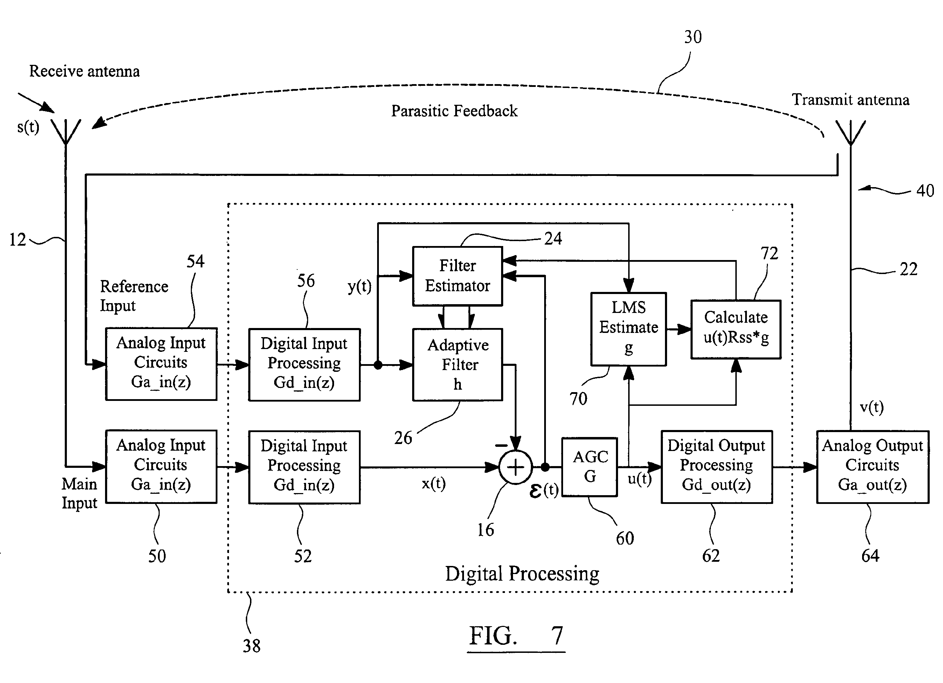

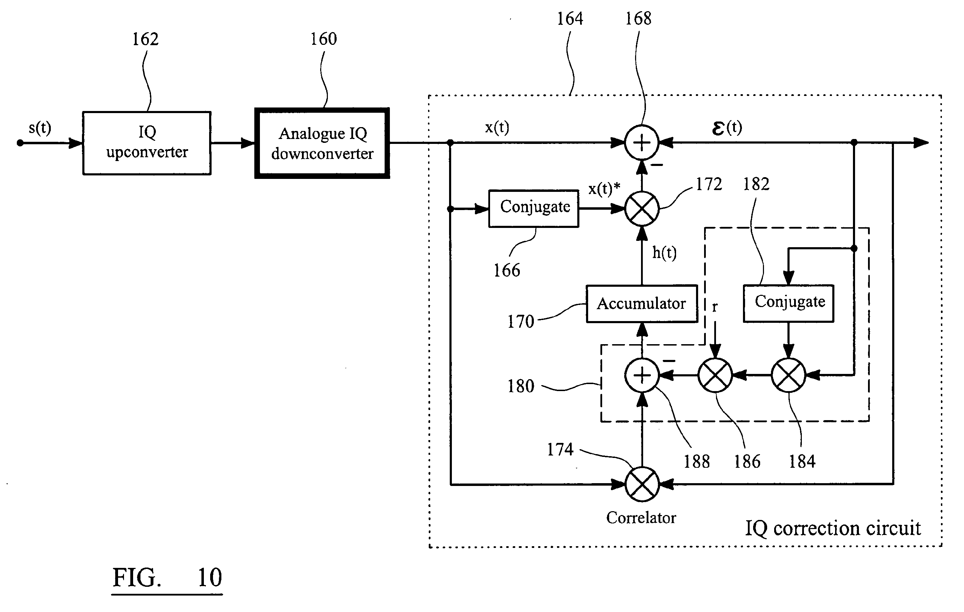

It is seen that the processor 38 of Figure 7 comprises an adaptive filter 26 for removing autocorrelation or cross-correlation from a target signal or signals. The filter is provided with the coefficient generator or filter estimator 24 for generating one or a plurality of filter coefficients. The coefficients are modified by compensating circuits 70, 72 such as to prevent the removal of desirable autocorrelation or cross-correlation that exists in the target signal or signals. The modification is effected by modifying the reference signal so that modified coefficients are generated. Alternatively, instead of modifying the reference signal as applied to the estimator, the coefficients that are output by the estimator 24 could be modified. It will be seen below that this approach is adopted in relation to the example of Figure 10.

*Modification of the reference signal used in the LMS estimator in an on-channel repeater.*

The method proposed is described in the context of an arrangement as shown in Figure 3 but is also applicable to the arrangement of Figure 2, as noted below.

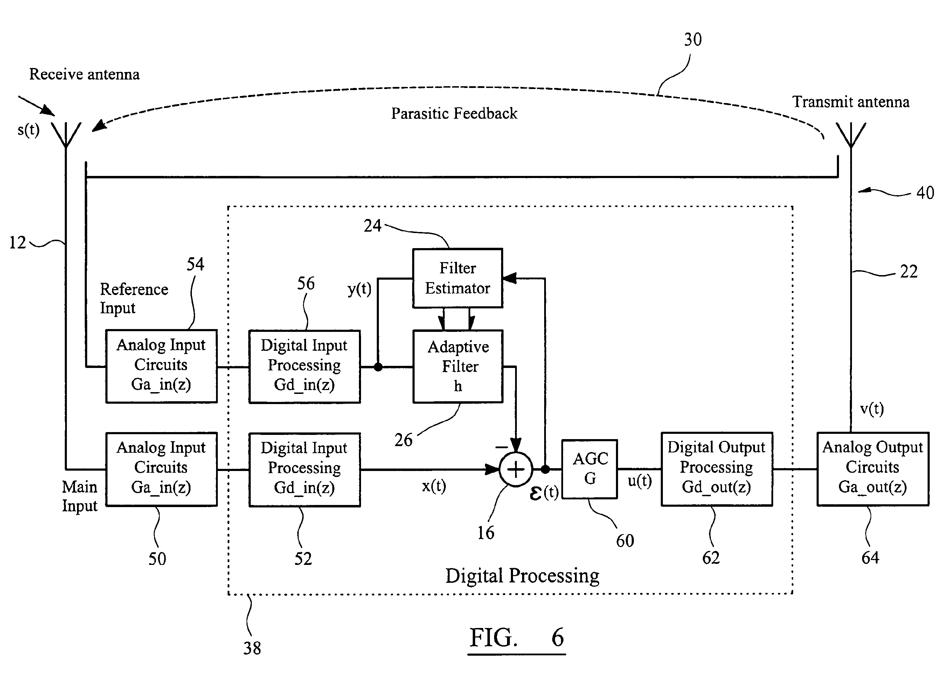

The general on-channel repeater architecture is shown in Figure 7, which is based on Figure 3 but with certain elements expanded. The expansion alone is shown in Figure 6. In particular this figure shows blocks representing various analog and digital circuits present in the repeater. These comprise analog input circuits 50 and digital input circuits 52 for the main signal from the input antenna 12, analog input circuits 54 and digital input circuits 56 for the reference signal derived from the transmit antenna 22, and digital output circuits 62 and analog output circuits 64 for the rebroadcast signal to the output antenna 22. The digital processing takes place in the processor 38.

The on-channel repeater recovers the signal $\varepsilon(t)$ from the corrupted input signal $x(t)$ and the reference signal $y(t)$ using an adaptive FIR filter 26 of length N with coefficients h:

$$\varepsilon(t) = x(t) - \mathbf{y}(t)^{\mathrm{T}}\mathbf{h}(t) \qquad (9)$$

where $\mathbf{y}(t) = [y(t)\ y(t\text{-}1)\ y(t\text{-}2)\ ...\ y(t\text{-}N\text{+}1)]^{\mathrm{T}}$

The analogue processing block 54 of the reference signal is optional if $y(t)$ is taken after the digital output processing. The digital input processing of the reference signal also becomes redundant if $y(t)$ is connected to $\varepsilon(t)$ through a delay line.

The objective is to make $\varepsilon(t)$ as similar as possible to the original wanted signal $s(t)$. Then the recovered signal is amplified to yield:

$$u(t) = G(t)\varepsilon(t) \qquad (10)$$

where $G(t)$ is the gain applied to the signal, usually by an Automatic Gain Control circuit. This is illustrated at 60 in Figure 6.

The retransmitted signal $v(t)$ at antenna 22 has a z-domain representation $V(z)$ and is produced as follows:

$$V(z) = U(z)G_{d\_out}(z)G_{a\_out}(z) \qquad (11)$$

where $Gd_{\_out}(z)$ is the transfer function of all the digital circuits 62 up to the digital output and $Ga_{\_out}(z)$ is the transfer function of all the analogue circuits 64 up to the antenna feed.

The reference signal $y(t)$ can be derived from the signal in the antenna feed, as described in European Patent Application EP 1724946 referred to above:

$$Y(z) = V(z)G_{ref}(z) \qquad (12)$$

where $G_{ref}(z)$ is the transfer function of all analogue and digital circuits 54, 56 from the antenna feed to $Y(z)$.

Alternatively, if as in Figure 2 there is no need to use an external reference, $y(t)$ can be derived in the digital domain only, so that:

$$Y(z) = U(z)G_{d\_out}(z)G_{d\_in}(z) \qquad (13)$$

where $Gd\_in(z)$ is the transfer function of all digital circuits from the digital reference input to $y(t)$.

To simplify, the action of $G_{ref}(z)$ can be expressed as a filter $\mathbf{g}(t)$ of length N applied to a vector of samples $\mathbf{u}(t)$ = $[u(t)\ u(t\text{-}1)\ u(t\text{-}2) \dots u(t\text{-}N+1)]^{T}$ :

$$y(t) = \mathbf{u}(t)^{T} \mathbf{g}(t) \qquad (14)$$

Here $\mathbf{g}(t)$ is the impulse response function of all digital and analogue circuits between $u(t)$ and $y(t)$, that is circuits 62, 64, 54 and 56. The time index $t$ is needed because g(t) includes analogue circuitry subject to slow changes due to temperature and ageing.

The conventional LMS algorithm determines the filter coefficients by successive updates as follows:

$$\mathbf{h}(t+1) = \mathbf{h}(t) + \mu\varepsilon(t)\mathbf{y}(t)^{*} \qquad (15)$$

where $\mu$ controls the speed of convergence. However, even if there is no parasitic feedback between antennas, there is a residual correlation between $\varepsilon(t)$ and $\mathbf{y}(t)$.

$$E\left[\varepsilon(t)y(t-n)^{*}\right] = E\left[\varepsilon(t)\left[\mathbf{u}(t-n)^{T}\mathbf{g}(t)\right]^{*}\right] =$$
$$= E\left[\varepsilon(t)\left[G(t)\varepsilon(t-n)^{T}\mathbf{g}(t)\right]^{*}\right] = G(t)E\left[\varepsilon(t)\varepsilon(t-n)^{*}\right]^{T}\mathbf{g}(t)^{*} \qquad (16)$$

where $\varepsilon(t\text{-}n) = [\varepsilon(t\text{-}n)\ \varepsilon(t\text{-}n\text{-}1)\ \varepsilon(t\text{-}n\text{-}2) \dots \varepsilon(t\text{-}n\text{-}N+1)]^{T}$.

When the estimator converges to the desired solution, the error $\varepsilon(t)$ is supposed to be equal to the original wanted signal s(t). Therefore:

$$E\left[\varepsilon(t)y(t-n)^{*}\right] = G(t)E\left[s(t)\mathbf{s}(t-n)^{*}\right]^{T}\mathbf{g}(t)^{*} \qquad (17)$$

It then follows that:

$$E\left[\varepsilon(t)\mathbf{y}(t)^{*}\right] = G(t)E\left[s(t)s(t)^{*}\right]\mathbf{R}_{ss}\mathbf{g}(t)^{*} \qquad (18)$$

where $\mathbf{R}_{ss}$ is a Hankel matrix whose coefficients are:

$$r_{nk} = \frac{E\left[s(t)s(t-k-n)^{*}\right]}{E\left[s(t)s(t)^{*}\right]} \qquad (19)$$

where $0 \leq n, k \leq N-1$.

In fact $\mathbf{R}_{ss}$ contains shifted versions of the autocorrelation function of $s(t)$. For example, for OFDM signals the autocorrelation function is almost equal to the sin(x)/x function.

Now the part of signal $\mathbf{y}(t)$ that is linearly dependent on $\varepsilon(t)$ can be calculated:

$$\mathbf{y}(t) = \mathbf{y}_o(t) + \frac{\varepsilon(t)}{\sqrt{\mathrm{E}[\varepsilon(t)\varepsilon(t)^*]}} \cdot \frac{\mathrm{E}[\varepsilon(t)\mathbf{y}(t)^*]^*}{\sqrt{\mathrm{E}[\varepsilon(t)\varepsilon(t)^*]}} = \mathbf{y}_o(t) + \frac{\varepsilon(t)}{\sqrt{\mathrm{E}[\varepsilon(t)\varepsilon(t)^*]}} \cdot \frac{G(t)\mathrm{E}[s(t)s(t)^*]\mathbf{R}_{ss}^*\mathbf{g}(t)}{\sqrt{\mathrm{E}[\varepsilon(t)\varepsilon(t)^*]}}$$

$$= \mathbf{y}_o(t) + \frac{\varepsilon(t)G(t)\mathrm{E}[\varepsilon(t)\varepsilon(t)^*]\mathbf{R}_{ss}^*\mathbf{g}(t)}{\mathrm{E}[\varepsilon(t)\varepsilon(t)^*]} = \mathbf{y}_o(t) + \varepsilon(t)G(t)\mathbf{R}_{ss}^*\mathbf{g}(t) = \mathbf{y}_o(t) + u(t)\mathbf{R}_{ss}^*\mathbf{g}(t)$$

$$(20)$$

where $\mathbf{y}_o(t)$ is the uncorrelated part.

In accordance with this invention the signal vector $\mathbf{y}(t)$ is modified in order to remove from it the part linearly dependent on $\varepsilon(t)$:

$$\mathbf{h}(t+1) = \mathbf{h}(t) + \mu\varepsilon(t)[\mathbf{y}(t) - u(t)\mathbf{R}_{ss}^*\mathbf{g}(t-q)]^* \qquad (21)$$

This demonstrates that it is possible for the filter to be controlled so as to avoid adverse effects of autocorrelation of the input signal due to the active bandwidth of the input signal being smaller than the Nyquist bandwidth. In the described embodiment illustrated in Figure 7 the control means controls the filter to remove the part of the reference signal that is substantially linearly dependent upon the wanted signal. As is seen from Equation (21), the impulse response function $\mathbf{g}$ for the reference signal is multiplied by a matrix $\mathbf{R}_{ss}$ containing shifted versions of the autocorrelation function of the recovered signal.

Since under normal circumstances g(t) changes very slowly, it is possible to use its version obtained at some previous instance q cycles (samples) earlier to make implementation easier. Moreover, the product $\mathbf{R}_{ss}\mathbf{g}(t-q)^*$ need not be computed every sample and the multiplication to produce this product may take longer than one sample period of the signal. The above filter update can also be rewritten and modified as follows:

$$\mathbf{h}(t+1) = \mathbf{h}(t) + \mu[\varepsilon(t)\mathbf{y}(t)^* - \varepsilon(t-m)u(t-m)^*\mathbf{R}_{ss}\mathbf{g}(t-q)^*] \qquad (22)$$

to remove the intrinsic autocorrelation of the recovered signal from the accumulated cross-correlation between the reference and the recovered signal.

By using samples at some previous (but recent) instances m cycles before the current update, the statistics of the result are changed and the convergence is slightly degraded, but this expression may be easier to implement. In fact, in order to reduce the noise contribution of the second term inside the bracket, additional averaging can be applied just to that part.

The impulse response $\mathbf{g}(t)$ can be estimated by using another LMS equaliser 70 by minimising an error signal $d(t)$:

$$d(t) = y(t) - \mathbf{u}(t)^T\mathbf{g}(t) \qquad (23)$$

using a filter update:

$$\mathbf{g}(t+1) = \mathbf{g}(t) + \mu_g d(t)\mathbf{u}(t)^* \qquad (24)$$

Figure 7 shows a modified architecture implementing Equations (9), (21) and (24). Figure 7 includes circuits 70, 72 corresponding to the circuits 158, 156 of Figure 5.

If the repeater is configured as a simple channel equalizer with internal digital reference, $\mathbf{g}(t)$ becomes a delta function:

$$\mathbf{g}(t) = \delta(t - n) \qquad (25)$$

and the gain G(t) = 1. Then the update simplifies to:

$$\mathbf{h}(t+1) = \mathbf{h}(t) + \mu\varepsilon(t)\big[\varepsilon(t-n) - \varepsilon(t)\mathbf{r}(n)^{\bullet}\big]^{\dagger} \qquad (26)$$

or

$$\mathbf{h}(t+1) = \mathbf{h}(t) + \mu\big[\varepsilon(t)\varepsilon(t-n)^{\bullet} - \varepsilon(t-m)\varepsilon(t-m)^{\bullet}\mathbf{r}(n)\big] \qquad (27)$$

where r(n) is the n-th column of $\mathbf{R}_{SS}$. The term $u(t)\mathbf{Rss}^{*}\mathbf{g}$ is calculated in circuit 72, which receives the vector $\mathbf{g}$ estimated in LMS estimator 70.

*Variant 1.*

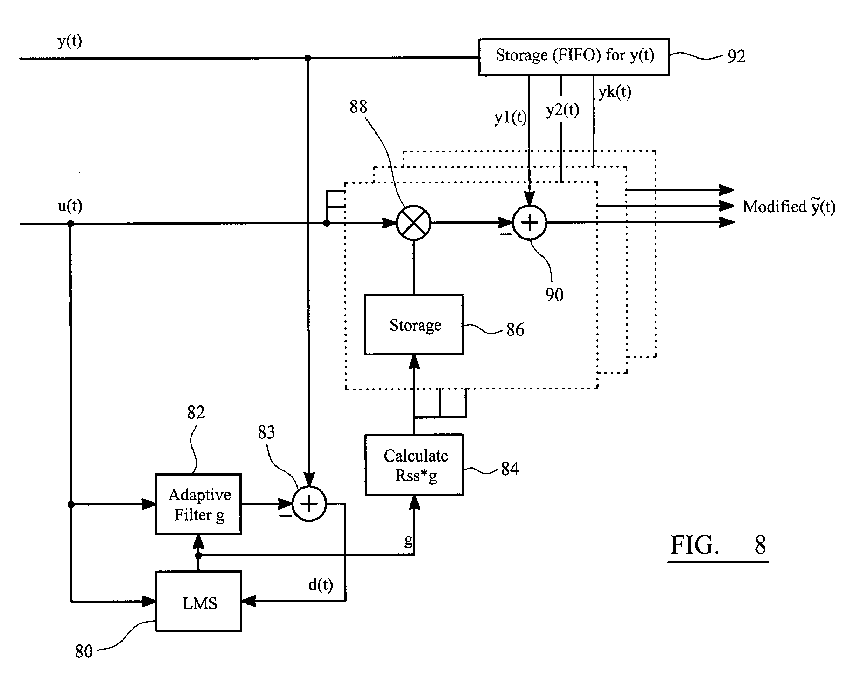

One possible way of implementing the expression in the square bracket of Equation (21) modifies all the elements of the vector $\mathbf{y}(t)$ in parallel as shown in Figure 8. First the vector $\mathbf{g}$ is estimated in circuit 80 using an LMS algorithm and an adaptive filter 82 that matches $u(t)$ to $y(t)$. A subtractor 83 generates $d(t)$ and applies it to the LMS circuit 80. Also $\mathbf{g}$ is supplied to a module 84 that multiplies it by $\mathbf{R}_{SS}$. The result of this multiplication is a vector, each element of which has its own storage 86. That can for example be a location in RAM or a register. Each value is then multiplied by $u(t)$ in multiplier 88 and that product is subtracted in subtractor 90 from the corresponding element of $y(t)$, which is stored in a FIFO (first-in, first-out) register 92.
Alternatively the elements of y(t) may be processed is series rather than in parallel, provided that the entire vector can be processed during one sample period.

*Variant 2.*

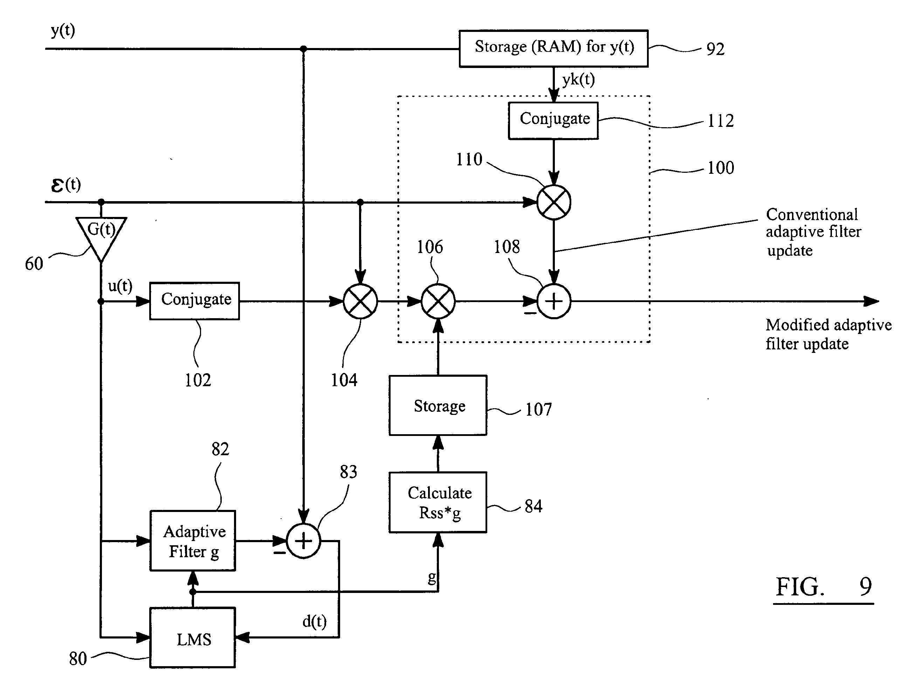

Another way of implementing the expression in the square bracket of Equation (22) to produce adaptive filter updates for an LMS algorithm is illustrated in Figure 9. The vector of updates for N filter coefficients is computed in series by processing values at N times the sample rate of $\varepsilon(t)$ inside the area 100, shown with dotted line, where N is the length of the adaptive filter. The LMS error signal $\varepsilon(t)$ is subjected to gain $G(t)$ to produce $u(t)$. This is then conjugated in a conjugator 102 and multiplied by $\varepsilon(t)$ in a multiplier 104. That product is further multiplied in a multiplier 106 by the product of $\mathbf{R}_{ss}\mathbf{g}^{*}$ held in storage 107 to obtain the correction for the adaptive filter update. This correction is subtracted in a subtractor 108 from the conventional filter update which is a product obtained in a multiplier 110 of $\varepsilon(t)$ and the conjugate of $\mathbf{y}(t)$. The impulse response $\mathbf{g}$ is obtained using another LMS algorithm as in Embodiment 1. Storage 92, this time in the form of random access memory (RAM), holds $y(t)$, and a conjugator 112 provides its conjugate to the multiplier 110, as shown.

*Modification of the reference signal used in an IQ crosstalk removal system.*

The method can also be applied to the IQ crosstalk removal circuit as described in European Patent Application 1801963. The system uses an adaptive filter 164 to correct gain mismatch and remove crosstalk between the real and imaginary output of an analogue IQ downconverter 160 which follows an IQ upconverter 162. However, some types of input signal would lead to incorrect filter estimates. For example, the pilot signals in a DVB-T signal may result in non-zero filter coefficients even if the IQ output is not corrupted in any way. The method now described enables the underlying correlation of the signal with its complex conjugate to be taken into account.
The IQ crosstalk removal circuit removes from the input signal $x(t)$ its own complex conjugate $x(t)^{*}$ that may have been introduced by an analogue IQ demodulator. It is assumed in this example that the adaptive filter is of relatively simple form, with just a single tap. For a system with one coefficient it can be written as follows:

$$\varepsilon(t) = x(t) - x(t)^{\bullet}h(t) \qquad (28)$$

with the coefficient estimate:

$$h(t+1) = h(t) + \mu\varepsilon(t)x(t) \qquad (29)$$

However, the original source signal s(t) may have a non-zero correlation with its own conjugate:

$$r = \mathrm{E}\left[s(t)\left(s(t)^*\right)^*\right] = \mathrm{E}[s(t)s(t)] \neq 0 \qquad (30)$$

Since this would lead to an incorrect estimate of h, the following modification is needed:

$$h(t+1) = h(t) + \mu\varepsilon(t)\left[x(t) - r\varepsilon(t)^*\right] \qquad (31)$$

The above expression is equivalent to Equation (26) and can also be rewritten as follows:

$$h(t+1) = h(t) + \mu\left[\varepsilon(t)x(t) - r\varepsilon(t)\varepsilon(t)^*\right] \qquad (32)$$

which is equivalent to Equation (27). It can be implemented as shown in the dashed area 180 in Figure 10.

A telecommunications system in Figure 10 takes a complex input signal s(t), and performs an IQ upconversion 162 to a target frequency at which the system transmits signals. At the receiving end an analogue IQ downconverter 160 tries to recover the original complex signal $s(t)$, but due to various analogue parasitic effects and imperfections, it produces a signal $x(t)$ which contains some IQ crosstalk. Signal $x(t)$ is then passed to the IQ correction circuit 164. As noted above, Figure 10 shows a correction circuit with only one coefficient, for simplicity. Those skilled in the art will readily appreciate that it can be expanded to more coefficients.

Signal $x(t)$ is conjugated in a conjugator 166 and multiplied in a complex multiplier 172 by a coefficient obtained from an accumulator 170. The result of that multiplication is the IQ crosstalk correction signal that is then subtracted in an adder or combiner 168 from signal $x(t)$ to obtain the output $\varepsilon(t)$. Signal $\varepsilon(t)$ is multiplied by the input s(t) in a complex multiplier 174 acting as a non-conjugating correlator. In the original implementation according to European Patent Application 1801963, the result of this multiplication is passed directly to the accumulator 170, which works according to Equation (29). The components of Figure 10 correspond to those of Figure 1 of EP 1801963 as in the following table, referring to their reference numerals:

| Figure 10 | Figure 1 |
|-----------|----------|
| 166 | 20 |
| 168 | 14 |
| 170 | 40 |
| 172 | 24 |
| 174 | 36 |

However in the case of Figure 10 additional components in the area 180 are added. First, the power level of signal $\varepsilon(t)$ is computed by multiplying it by its own conjugate as in $\varepsilon(t)\varepsilon(t)^*$. This is shown by conjugator 182 and multiplier 184. In practice two real multipliers and an adder could be used instead of the conjugator and a complex multiplier, as in $\mathrm{Re}[\varepsilon(t)]^2 + \mathrm{Im}[\varepsilon(t)]^2$. Then the coefficient r, precomputed according to Equation (30), is multiplied by $\varepsilon(t)\varepsilon(t)^*$ in multiplier 186 to obtain a compensation value. This value is subtracted from the product $\varepsilon(t)x(t)$ in a subtractor 188 and fed into the accumulator 170.

If the IQ correction filter 164 has multiple coefficients h, the correlation value r becomes a vector r in Equations (31) and (32).

It is seen that in this case the compensation is provided by modifying the output of the filter coefficient estimator, viz. the correlator 174, rather than by modifying the reference signal applied to an input of that correlator.

*General comments*

It will be seen that the above describes a modification of a digital adaptive filter that extracts a wanted signal from an input signal that has been corrupted by parasitic feedback, using a reference signal that is itself linearly derived from or correlated with the recovered wanted signal, that has the objective of preventing the filter estimator from removing the desired correlation. This is achieved in one example by modifying the reference signal used by the estimator, and in another by modifying the coefficients from the estimator as applied to the filter. The resulting adaptive filter does not suffer from spurious out-of-band tones due to the autocorrelation of the recovered signal caused by its bandwidth being smaller than the Nyquist bandwidth. The method effectively removes the part of the reference signal that is linearly dependent on, and thus correlated to, the wanted recovered signal.

The method may be used in a Least Mean Square (LMS) algorithm. In a modified LMS algorithm the cross-correlation between the recovered signal and the reference signal that is used in the estimation of adaptive filter coefficients can be adjusted so that the intrinsic cross-correlation that is not due to parasitic feedback but is due to the autocorrelation of the recovered signal is removed and does not contribute to the estimates of filter coefficients.

The part of the recovered signal that is to be removed from the reference signal can be derived by multiplying the impulse response function for the reference signal by a conjugated matrix containing shifted versions of the autocorrelation function of the recovered signal and then multiplying thus obtained vector by the current sample of the recovered signal. This multiplication must also include any gain factor not included in the impulse response function of the reference signal.

The implementation can be simplified by the multiplication of the impulse response function by the matrix taking more time than one sample of the recovered signal and by using the impulse response function from some previous but recent sampling instances.

The impulse response function for the reference signal may be obtained by means of an LMS algorithm that matches the reference signal to the wanted recovered signal, subjected to a gain factor.

The expensive computations involved in multiplying the impulse response function for the reference signal by a conjugated matrix containing shifted versions of the autocorrelation function of the recovered signal can be omitted if a variant of the adaptive filter is employed that uses a reference signal that is equal to the recovered signal. Then only the autocorrelation function is multiplied by the product of the current or previous but recent sample of the recovered signal and the complex conjugate of itself.

The present invention is defined and limited only by the scope of appended claims 1-15.

**Claims**

1. An adaptive filter arrangement for filtering a target received signal containing an original wanted signal and interfering signals so as to remove such interfering signals which are correlated with the target received signal whilst not removing autocorrelation properties of the original wanted signal to produce a recovered signal, the arrangement comprising:

    a coefficient generator (24; 174) for generating one or a plurality of filter coefficients,
    an adaptive filter (26; 172) coupled to the coefficient generator configured to receive the generated one or plurality of filter coefficients and apply a filter function dependent thereon to a reference signal derived from the recovered signal for producing said recovered signal from the received signal;
    said adaptive filter arrangement being **characterised in that** it further comprises:

    compensating means (70, 72; 180) for modifying said one or plurality of coefficients by computing a product signal by multiplying the recovered signal with an autocorrelation function of the recovered signal.

2. An adaptive filter arrangement according to claim 1, in which the compensating means (70, 72) is configured to modify the coefficients by modifying a signal applied to an input of the coefficient generator (24).

3. An adaptive filter arrangement according to claim 2, wherein the compensating means is configured to modify the signal applied to an input of the coefficient generator by subtracting the product signal from the reference signal.

4. An adaptive filter arrangement according to claim 1, in which the compensating means (180) is configured to modify the coefficients by modifying the output of the coefficient generator (174) as applied to the adaptive filter (172) and the product signal comprises a further multiplication by a conjugate of the received signal.

5. An adaptive filter according to claim 4, in which the compensating means is configured to modify the output of the coefficient generator by subtracting the result of multiplying the conjugated product signal by the recovered signal.

6. An adaptive filter arrangement according to claim 1, in which the coefficient generator is configured to receive a reference signal and the compensating means is configured to reduce or removed from the reference signal the part that is linearly dependent upon the wanted signal.

7. An adaptive filter arrangement according to claim 6, in which the compensating means includes means (70) for generating an impulse response function $g$ for the reference signal, and means (72) for multiplying the impulse response function $g$ for the reference signal by a matrix $R_{ss}$ containing shifted versions of the autocorrelation function of the recovered signal, to provide the product signal.

8. An adaptive filter arrangement according to claim 7, including means (72) for multiplying the product signal by the recovered signal and a gain factor $u(t)$.

9. An adaptive filter arrangement according to claim 8, in which the reference signal is used by a least-mean-square algorithm in said compensation means (70).

10. An adaptive filter arrangement according to claim 7, 8 or 9, in which a cross-correlation is used by said coefficient generator (24) to estimate said one or plurality of coefficients, wherein said cross-correlation is adjusted by subtracting the conjugate of the product signal multiplied by the product of the current sample of the recovered signal and the conjugate of the recovered signal or a recent previous sample of the recovered signal.

11. An adaptive filter arrangement according to any of claims 7 to 10, in which the multiplication to produce the product signal takes longer than one sample period of the signal and uses the impulse response function from an earlier sample.

12. An adaptive filter arrangement according to any of claims 7 to 10, in which the impulse response function $g$ for the reference signal is generated by a least-mean-squares algorithm which matches the reference signal to the recovered signal.

13. An adaptive filter arrangement according to any of claims 5 to 11, in which the reference signal is equal to the recovered signal, wherein only the autocorrelation function is multiplied by the product of the current or recent previous sample of the recovered signal and the complex conjugation of the recovered signal.

14. An on-channel repeater comprising an adaptive filter arrangement in accordance with any preceding claim.

15. An IQ crosstalk reduction circuit comprising an adaptive filter arrangement in accordance with any of claims 1-13.

**Patentansprüche**

1. Adaptive Filteranordnung zum Filtern eines empfangenen Zielsignals, das ein ursprüngliches erwünschtes Signal und Störsignale enthält, um solche Störsignale zu entfernen, die mit dem empfangenen Zielsignal korreliert sind, ohne dabei Autokorrelationseigenschaften des ursprünglichen erwünschten Signals zu entfernen, um ein zurückgewonnenes Signal zu erzeugen, wobei die Anordnung Folgendes umfasst:

einen Koeffizientengenerator (24; 174) zum Erzeugen von einem oder mehreren Filterkoeffizienten,
ein adaptives Filter (26; 172), das mit dem Koeffizientengenerator gekoppelt ist, konfiguriert zum Empfangen der erzeugten ein oder mehreren Filterkoeffizienten und zum Anwenden einer davon abhängigen Filterfunktion auf ein von dem zurückgewonnenen Signal abgeleitetes Referenzsignal zum Erzeugen des genannten zurückgewonnenen Signals von dem empfangenen Signal;
wobei die genannte adaptive Filteranordnung **dadurch gekennzeichnet ist, dass** sie ferner Folgendes umfasst:

Kompensationsmittel (70, 72; 180) zum Modifizieren der genannten ein oder mehreren Koeffizienten durch Berechnen eines Produktsignals durch Multiplizieren des zurückgewonnenen Signals mit einer Autokorrelationsfunktion des zurückgewonnenen Signals.

**2.** Adaptive Filteranordnung nach Anspruch 1, wobei das Kompensationsmittel (70, 72) zum Modifizieren der Koeffizienten durch Modifizieren eines an einen Eingang des Koeffizientengenerators (24) angelegten Signals konfiguriert ist.

**3.** Adaptive Filteranordnung nach Anspruch 2, wobei das Kompensationsmittel zum Modifizieren des an einen Eingang des Koeffizientengenerators angelegten Signals durch Subtrahieren des Produktsignals von dem Referenzsignal konfiguriert ist.

**4.** Adaptive Filteranordnung nach Anspruch 1, wobei das Kompensationsmittel (180) zum Modifizieren der Koeffizienten durch Modifizieren des Ausgangs des Koeffizientengenerators (174) wie an das adaptive Filter (172) angelegt konfiguriert ist und das Produktsignal eine weitere Multiplikation mit einem Konjugat des empfangenen Signals umfasst.

**5.** Adaptives Filter nach Anspruch 4, wobei das Kompensationsmittel zum Modifizieren des Ausgangs des Koeffizientengenerators durch Subtrahieren des Ergebnisses des Multiplizierens des konjugierten Produktsignals mit dem zurückgewonnenen Signal konfiguriert ist.

**6.** Adaptive Filteranordnung nach Anspruch 1, wobei der Koeffizientengenerator zum Empfangen eines Referenzsignals konfiguriert ist und das Kompensationsmittel zum Reduzieren oder Entfernen des von dem erwünschten Signal linear abhängigen Teils von dem Referenzsignal konfiguriert ist.

**7.** Adaptive Filteranordnung nach Anspruch 6, wobei das Kompensationsmittel Mittel (70) zum Erzeugen einer Impulsantwortfunktion $g$ für das Referenzsignal und Mittel (72) zum Multiplizieren der Impulsantwortfunktion $g$ für das Referenzsignal mit einer Matrix $R_{ss}$ beinhaltet, die verschobene Versionen der Autokorrelationsfunktion des zurückgewonnenen Signals enthält, um das Produktsignal bereitzustellen.

**8.** Adaptive Filteranordnung nach Anspruch 7, die Mittel (72) zum Multiplizieren des Produktsignals mit dem zurückgewonnenen Signal und einen Verstärkungsfaktor $u(t)$ beinhaltet.

**9.** Adaptive Filteranordnung nach Anspruch 8, wobei das Referenzsignal von einem Kleinste-mittlere-Quadrate-Algorithmus in dem genannten Kompensationsmittel (70) benutzt wird.

**10.** Adaptive Filteranordnung nach Anspruch 7, 8 oder 9, wobei eine Kreuzkorrelation von dem genannten Koeffizientengenerator (24) zum Schätzen der genannten ein oder mehreren Koeffizienten benutzt wird, wobei die genannte Kreuzkorrelation durch Subtrahieren des Konjugats des Produktsignals multipliziert mit dem Produkt des aktuellen Sample des zurückgewonnenen Signals und dem Konjugat des zurückgewonnenen Signals oder einem kurz zurückliegenden Sample des zurückgewonnenen Signals justiert wird.

**11.** Adaptive Filteranordnung nach einem der Ansprüche 7 bis 10, wobei die Multiplikation zum Erzeugen des Produktsignals länger als eine Sample-Periode des Signals dauert und die Impulsantwortfunktion von einem früheren Sample benutzt.

**12.** Adaptive Filteranordnung nach einem der Ansprüche 7 bis 10, wobei die Impulsantwortfunktion g für das Referenzsignal von einem Kleinste-mittlere-Quadrate-Algorithmus erzeugt wird, der das Referenzsignal mit dem zurückgewonnenen Signal abgleicht.

**13.** Adaptive Filteranordnung nach einem der Ansprüche 5 bis 11, wobei das Referenzsignal gleich dem zurückgewonnenen Signal ist, wobei nur die Autokorrelationsfunktion mit dem Produkt des aktuellen oder kurz zurückliegenden Sample des zurückgewonnenen Signals und der komplexen Konjugation des zurückgewonnenen Signals multipliziert wird.

**14.** On-Channel-Repeater, der eine adaptive Filteranordnung nach einem vorherigen Anspruch umfasst.

**15.** IQ-Übersprechenreduktionsschaltung, die eine adaptive Filteranordnung nach einem der Ansprüche 1-13 umfasst.

**Revendications**

1. Arrangement de filtre adaptatif pour filtrer un signal reçu cible contenant un signal original désiré et des signaux brouilleurs afin de retirer de tels signaux brouilleurs qui sont en corrélation avec le signal reçu cible tout en ne retirant pas les propriétés d'auto-corrélation du signal original désiré dans le but de produire un signal récupéré, l'arrangement comprenant :

   un générateur de coefficients (24, 174) pour générer un ou une pluralité de coefficients de filtrage,
   un filtre adaptatif (26, 172) couplé au générateur de coefficients configuré pour recevoir le coefficient généré ou la pluralité de coefficients générés et appliquer une fonction de filtrage qui en est dépendante à un signal de référence dérivé du signal récupéré afin de produire ledit signal récupéré dudit signal reçu ;
   ledit arrangement de filtre adaptatif étant **caractérisé en ce qu'**il comprend en outre:

   un moyen compensateur (70, 72, 180) pour modifier ledit un ou la pluralité de coefficients en calculant un signal de produit en multipliant le signal récupéré par une fonction d'auto-corrélation du signal récupéré.

2. Arrangement de filtre adaptatif selon la revendication 1, dans lequel le moyen compensateur (70, 72) est configuré pour modifier les coefficients en modifiant un signal appliqué à une entrée du générateur de coefficients (24).

3. Arrangement de filtre adaptatif selon la revendication 2, dans lequel le moyen compensateur est configuré pour modifier le signal appliqué à une entrée du générateur de coefficients en soustrayant le signal de produit du signal de référence.

4. Arrangement de filtre adaptatif selon la revendication 1, dans lequel le moyen compensateur (180) est configuré pour modifier les coefficients en modifiant la sortie du générateur de coefficients (174) telle qu'appliquée au filtre adaptatif (172) et le signal de produit comprend une multiplication supplémentaire par un conjugué du signal reçu.

5. Filtre adaptatif selon la revendication 4, dans lequel le moyen compensateur est configuré pour modifier la sortie du générateur de coefficients en soustrayant le résultat de la multiplication du signal de produit conjugué par le signal récupéré.

6. Arrangement de filtre adaptatif selon la revendication 1, dans lequel le générateur de coefficients est configuré pour recevoir un signal de référence et le moyen compensateur est configuré pour réduire ou retirer du signal de référence la partie qui est linéairement dépendante du signal désiré.

7. Arrangement de filtre adaptatif selon la revendication 6, dans lequel le moyen compensateur comprend un moyen (70) pour générer une fonction de réponse en impulsion $g$ pour le signal de référence, et un moyen (72) pour multiplier la fonction de réponse en impulsion $g$ pour le signal de référence par une matrice $R_{ss}$ contenant des versions décalées de la fonction d'auto-corrélation du signal récupéré, afin de fournir le signal de produit.

8. Arrangement de filtre adaptatif selon la revendication 7, comprenant un moyen (72) pour multiplier le signal de produit par le signal récupéré et un facteur de gain $u(t)$.

9. Arrangement de filtre adaptatif selon la revendication 8, dans lequel le signal de référence est utilisé par un algorithme des moindres carrés dans ledit moyen compensateur (70).

10. Arrangement de filtre adaptatif selon la revendication 7, 8 ou 9, dans lequel une corrélation croisée est utilisée par ledit générateur de coefficients (24) pour estimer ledit un ou ladite pluralité de coefficients, où ladite corrélation croisée est ajustée en soustrayant le conjugué du signal de produit multiplié par le produit de l'échantillon courant du signal récupéré et le conjugué du signal récupéré ou d'un échantillon précédent récent du signal récupéré.

11. Arrangement de filtre adaptatif selon l'une quelconque des revendications 7 à 10, dans lequel la multiplication pour produire le signal de produit prend plus longtemps qu'une période d'échantillonnage du signal et utilise la fonction de réponse en impulsion d'un échantillon antérieur.

12. Arrangement de filtre adaptatif selon l'une quelconque des revendications 7 à 10, dans lequel la fonction de réponse en impulsion $g$ pour le signal de référence est générée par un algorithme des moindres carrés qui assortit le signal de référence au signal récupéré.

**13.** Arrangement de filtre adaptatif selon l'une quelconque des revendications 5 à 11, dans lequel le signal de référence est égal au signal récupéré, où seule la fonction d'auto-corrélation est multipliée par le produit de l'échantillon courant ou précédent récent du signal récupéré et la conjugaison complexe du signal récupéré.

**14.** Répéteur sur canal comprenant un arrangement de filtre adaptatif selon l'une quelconque des revendications précédentes.

**15.** Circuit de réduction de diphonie IQ comprenant un arrangement de filtre adaptatif selon l'une quelconque des revendications 1-13.

24                                                          120

REFERENCE
INPUT
                                    FILTER
y(t)                                ESTIMATOR

124

                                    ADAPTIVE
                                    FILTER

                                    26

                                                    −        RECOVERED
MAIN INPUT          x(t)                                     SIGNAL
WITH UNWANTED CORRELATION              +

122                                         16    $\varepsilon$(t)        128

**FIG.    1**

Amplified
repeated signal                                    Unwanted spurious
                                                   components

          Original weak
          received signal

                                        Useful signal
                                        bandwidth

                                                        Frequency

                    Nyquist bandwidth

**FIG.    4**

**FIG. 2**

**FIG. 3**

EP 2 053 812 B1

FIG. 5

FIG. 6

EP 2 053 812 B1

FIG. 7

EP 2 053 812 B1

FIG. 8

FIG. 9

EP 2 053 812 B1

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 772310 B
- EP 1724946 A
- EP 1555769 A
- EP 1744455 A
- EP 1801963 A

**Non-patent literature cited in the description**

- **HAYKIN, S.** Adaptive Filter Theory. Prentice-Hall